# EUROPÄISCHE PATENTSCHRIFT

(11) **EP 2 054 482 B1**
(45) Veröffentlichungstag und Bekanntmachung des Hinweises auf die Patenterteilung: **22.09.2010**
(21) Anmeldenummer: 07765615.5
(22) Anmeldetag: 26.06.2007
(51) Int. Cl.: C09J 123/00, C09J 123/08, C09J 11/08, C09J 11/06

(54) **SCHMELZKLEBSTOFF MIT VERBESSERTER HAFTUNG**
HOTMELT ADHESIVE WITH IMPROVED ADHESION
ADHÉSIF THERMOFUSIBLE À ADHÉSION AMÉLIORÉE

(30) Priorität: 25.08.2006 DE 102006039833
(43) Veröffentlichungstag der Anmeldung: 06.05.2009
(73) Patentinhaber: Henkel AG & Co. KGaA, 40589 Düsseldorf (DE)
(72) Erfinder: EBERHARDT, Ralf, 73430 Aalen (DE); HOFFMANN, Gunter, 73441 Bopfingen (DE); STRAUSS, Katja, 86720 Nördlingen (DE); GRAUEL, Ralf, 40724 Hilden (DE); SCHOLTA, Richard, 51069 Köln (DE); KELS, Volker, 41470 Neuss (DE); KASPER, Dirk, 40597 Düsseldorf (DE)
(86) Internationale Anmeldenummer: PCT/EP2007/056341
(87) Internationale Veröffentlichungsnummer: WO 2008/022828

(56) Entgegenhaltungen:
- WO-A-01/10967
- WO-A-2005/059024
- US-B1- 6 319 979
- DU PONT PACKAGING: "Data Sheet Nucrel AE"[Online] 9. Oktober 2005 (2005-10-09), XP002454356 Gefunden im Internet: URL:HTTP://WWW2.DUPONT.COM/NUCREL/EN_US/AS SETS /DOWNLOADS/NUCREL_AE.PDF> [gefunden am 2007-10-10]

## Beschreibung

Die Erfindung betrifft einen Schmelzklebstoff auf der Basis mindestens eines Polyethylen- und/oder Polypropylen-(Co)polymeren, eines weiteren thermoplastischen Polymeren auf Basis eines Ethylen/(Meth)Acrylsäureester/ungesättigte Carbonsäure Terpolymeren, mindestens eines klebrig machenden Harzes, sowie ggf. Wachsen und Additiven. Die Erfindung betrifft ebenso die Verwendung dieses Schmelzklebstoffes zum Verkleben von Verpackungen und Kartonagen, speziell von Substraten mit veredelten Oberflächen, wie Kunststoff- oder Metallbeschichtungen und andere Beschichtungen, sowie speziellen Lackierungen.

Unter Schmelzklebstoffen werden Klebstoffe verstanden, die als Schmelze auf die zu verklebenden Teile aufgetragen werden und beim Abkühlen unter Verfestigung abbinden. Schmelzklebstoffe finden eine breite industrielle Anwendung, beispielsweise werden sie in der Verpackungs- und Papierindustrie zum Versiegeln und Verschließen und Aufrichten von Kartons und Faltschachteln oder zum Laminieren mehrschichtiger Papiere verwendet. Die Anforderungen, die solche Schmelzklebstoffe für die unterschiedlichen Applikationen erfüllen müssen, sind vielfältig.

So müssen die Schmelzklebstoffe eine mittlere bis lange Offene Zeit (definiert als Zeitspanne zwischen Klebstoffauftrag und dem Zusammenfügen der Fügeteile) besitzen, aber nach Fixierung der Fügeteile schnell genug abbinden, um eine qualitätsgerechte Verklebung, insbesondere auf schnelllaufenden Verpackungsmaschinen zu gewährleisten. Neben der Abbindegeschwindigkeit ist die Viskosität ein wichtiges Kriterium für die Auswahl des Schmelzklebstoffes. Für die maschinelle Verarbeitung, speziell für einen gleichmäßigen Schmelzklebstoffauftrag, sollte die Viskosität bei entsprechender Applikationstemperatur ausreichend niedrig sein. Für Verklebungen von Verpackungen im Tiefkühlbereich sollte eine entsprechende Kälteflexibilität vorhanden sein. Das heißt, in der Kälte sollte eine hohe Festigkeit der Klebe-Bindung bestehen und der Klebstoff nicht verspröden oder brechen. Andererseits werden häufig warm oder heiß abgefüllte Lebensmittel oder Getränke verpackt, so dass hier eine entsprechend hohe Wärmefestigkeit des Klebstoffes gefordert ist. Unter ausreichend hoher Wärmestandfestigkeit ist zu verstehen, dass der abgebundene Klebstoff unter erneuter Einwirkung erhöhter Temperatur nicht unmittelbar erweicht und sich dadurch die Verklebung löst und /oder die verklebten Teile sich gegeneinander verschieben. Andererseits besitzen die zu verklebenden Substrate der Verpackungsmaterialien eine breite Vielfalt der Oberflächenbeschaffenheit. Zum Beispiel können Substratoberflächen durch Kunststoff-, Metall- u.a. Beschichtungen oder durch Lackierungen veredelt sein. Diese Oberflächenveredelungen erfordern spezielle adhäsive Eigenschaften um gute Verbundfestigkeiten zu erzielen. Um den Schmelzklebstoff universell einsetzen zu können, muss er über ein breites Adhäsionsspektrum zu oben genannten Substraten verfügen. Schmelzklebstoffe werden in ihrer Anwendung thermisch längere Zeit stark belastet. Eine wichtige Forderung ist deshalb eine hohe thermische Stabilität bei Applikationstemperatur. Die thermische Stabilität von Schmelzklebstoffen ist unter anderem abhängig von der Verträglichkeit der dem Schmelzklebstoff zugrunde liegenden Komponenten. Speziell bei Komponenten, die die Adhäsion erhöhen, ist oftmals Unverträglichkeit gegeben, insbesondere bei Schmelzklebstoffen auf Basis von unpolaren Polyethylen- oder Polypropylen-(Co)Polymeren. Weiterhin ist insbesondere für die Lebensmittelindustrie gefordert, möglichst geruchsfreie oder geruchsarme Schmelzklebstoffe bereitzustellen.

Schmelzklebstoffe auf Basis von Polyethylen- oder Polypropylen-Homo- oder Copolymeren sind bekannt. Die DE 696 02 035 T2 beschreibt beispielsweise einen Verpackungs-Schmelzklebstoff, der als Bestandteile mindestens ein Ethylen-n-Butylacrylat-Copolymeres enthält, ein Kolophoniumester-Klebrigharz, ein mikrokristallines Wachs oder Paraffin-Wachs sowie ein polymeres Additiv, das auch ein Ethylen- oder Propylenhomo- oder -copolymer sein kann.

In der US 6107430 wird ein Schmelzklebstoff beschrieben, der mindestens ein lineares homogenes Ethylen/C₃ - C₂₀-α-Olefin-Copolymere enthält, das eine Dichte von 0,850 g/cm³ bis 0,895 g/cm³ aufweist. Dabei soll das Copolymer eine Viskosität von 2000 mPas bis 18000 mPas aufweisen. Zusätzliche Ethylen/AcrylatCopolymere mit freien Carboxylgruppen werden nicht beschrieben.

Weiterhin ist die US 5530054 bekannt, in der ein Schmelzklebstoff beschrieben wird, der im wesentlichen aus einem Copolymer auf Basis von Ethylen und C₄ bis C₂₀ -α-Olefinen besteht und ein Kohlenwasserstoff-Klebrigharz.enthält, wobei dieses einen Erweichungspunkt zwischen 70 und 130° C aufweist. Die Ethylen/α-Olefin-Copolymere werden über Metallocen-Katalyse hergestellt und sind in Anteilen von 30 - 70 Gew.-% im Schmelzklebstoff enthalten. Zusätzliche Polymere auf Ethylen/Acrylatesterbasis mit Carboxylgruppen werden nicht beschrieben.

In der DE 199 44 225 werden sprühbare Schmelzklebstoffe beschrieben, die 30 bis 70 Gew.-% eines im wesentlichen amorphen Poly-α-Olefin-Copolymeren enthalten, wobei diese eine Dichte < 0,90 g/cm³ aufweisen sollen sowie eine Schmelzviskosität zwischen 1000 und 20000 mPas. Insbesondere werden Polyolefine beschrieben, die durch radikalischen Abbau von Poly-α-Olefinen hergestellt werden können. Ebenso wird zur Verbesserung der Verträglichkeit beschrieben, diese Poly-α-Olefine mit ungesättigten Carbonsäuren oder ihren Anhydriden zu modifizieren.

In der WO 2005/028584 werden Schmelzklebstoffe beschrieben, die auf Basis von Metallocen-Katalyse hergestellt werden. Dabei werden unter anderem als Zusatz Copolymere beschrieben auf Basis von Ethylen-Methylacrylestern mit vorgegebenen Methylacrylatgehelt, Ethylen-Acrylsäure mit speziellen Gehalten an Carboxylgruppen oder Ethylen-Butylacrylat. Terpolymere werden nicht beschrieben.

Die WO 2005/059024 beschreibt Zusammensetzungen, die 70 bis 90 Gew.-% eines linearen Polyethylens enthalten, sowie 0 bis 30 % von Ethylensäurecopolymeren, Ethylensäureionomeren und Mischungen davon sowie klebrigmachende Harze. Die linearen Polyethylene werden als übliche Polyethylene beschrieben, ein Copolymer mit C₄ bis C₂₀-α-Olefinen wird nicht beschrieben.

Die US 6,319,979 beschreibt Schmelzklebstoffe, die Copolymere von Ethylen mit C₃ bis C₂₀-α-Olefinen enthalten. Es werden dort jedoch keine zusätzlichen Polymere beschrieben, die auf Basis von Olefinen, (Meth)acrylsäureestern sowie Monomeren, die Carboxyl- oder Anhydridgruppen enthalten, beschrieben. Auch in Beispielen und Beschreibung sind solche Polymere nicht offenbart.

Die WO 01/10967 beschreibt ebenfalls Schmelzklebstoffe, die 5 bis 65 Gew.-% von elastischen Kautschuken oder Mischungen davon enthalten. Diese gummielastischen Polymere sollen maximal 70 % Propylen enthalten, zusammen mit funktionalisierten Monomeren. Andere nicht funktionalisierte Monomere werden nicht erwähnt. Deswegen müssen über 30 Gew.-% Carboxylgruppen enthaltende Monomere in diesem Polymer enthalten sein. Damit weisen diese Polymere einen sehr hohen Anteil von Carbonsäuregruppen auf.

Als Nachteile der Schmelzklebstoffen aus dem Stand der Technik ist festzustellen, dass gute Verarbeitungseigenschaften möglich sind, dabei jedoch die Haftung auf bzw. die dauerhafte Verklebung von schwierigen Substraten nachteilig beeinflusst werden.

Die Gewährleistung einer guten Verbundfestigkeiten bei den verschiedenen vorherrschenden Lagertemperaturen durch spezielle adhäsive Eigenschaften von Schmelzklebstoffen auf Basis von Polyethylen- und/oder Polypropylen-(Co)-Polymeren zu Substratoberflächen, die durch Kunststoff, Metall, fettabweisende Substanzen oder Lackierungen veredelt wurden, ist nur begrenzt gegeben.

Weiterhin ist entsprechend dem Stand der Technik nicht gewährleistet, dass Schmelzklebstoffe auf Basis von Polyethylen- oder Polypropylen-(Co)Polymeren mit entsprechenden Zusatzstoffen, eine ausreichend hohe thermische Stabilität bei Applikationstemperatur besitzen, die insbesondere durch gute Verträglichkeit der Schmelzklebstoffkomponenten erzielt wird.

Aufgabe der vorliegenden Erfindung ist es deswegen, einen Schmelzklebstoff auf Basis von Polyethylen- oder Polypropylen-(Co)Polymeren mit schneller Abbindung und gutem Verarbeitungsverhalten zur Verfügung zu stellen, der spezielle adhäsive Eigenschaften zu durch Kunststoffen, Metallen, fettabweisende Substanzen oder Lackierungen veredelte Substraten zum Erreichen hoher Verbundfestigkeiten bei den verschiedenen Lagertemperaturen besitzt, sowie eine hohe thermische Stabilität in der Schmelze gewährleistet.

Die Aufgabe wird dadurch gelöst, dass ein Schmelzklebstoff zur Verfügung gestellt wird, enthaltend 10 bis 80 Gew.-% mindestens eines Copolymeren auf Basis Ethyl len und/oder Propylen und C₄ bis C₂₀-α-Olefinen, das durch Metallocenkatalysierte Polymerisation erhältlich ist, 5 bis 60 Gew.-% mindestens eines klebrigmachenden Harzes, 0,1 bis 15 Gew.-% mindestens eines Polymerisates auf Basis von C₂ bis C₅-Olefinen und (Meth)Acrylsäureestern, wobei das Polymerisat COOH-Gruppen oder Anhydridgruppen enthält und im diesem Terpolymer 0,1 Gew.-% bis 7,5 Gew.-% von α,β- ungesätigten Mono- oder Dicarbonsäuren oder deren Anhydride enthalten sind, sowie 0 bis 45 Gew.-% Additive. Die Summe der Bestandteile soll dabei 100 % ergeben.

Ein weiterer Gegenstand der Erfindung ist die Verwendung solcher Schmelzklebstoffen zur Verklebung von Verpackungen und Kartonagen, wobei die verklebten Oberflächen durch Kunststoffe, Metalle, fettabweisende Substanzen oder durch Lackierungen veredelt sind. Ein weiterer Gegenstand der Erfindung ist die Verwendung solcher Klebstoffe zum Verbinden von Verpackungen mit Kunststoffformteilen, wie Verschlüsse, Ausgießer usw.

Der erfindungsgemäße Schmelzklebstoff enthält mindestens ein Homo- oder Copolymeres auf Basis von Ethylen und/oder Propylen sowie ggf. weiteren copolymerisierbaren Monomeren. Bei den Monomeren, die zusätzlich zu Ethylen und/oder Propylen eingesetzt werden können, handelt es sich um die bekannten mit Ethylen/Propylen copolymerisierbaren olefinisch ungesättigte Monomere. Insbesondere handelt es sich um lineare oder verzweigte C₄ bis C₂₀ -α-Olefine, wie Buten, Hexen, Methylpenten, Octen; cyclisch ungesättigte Verbindungen wie Norbonen oder Norbonadien; symmetrisch oder unsymmetrisch substituierte Ethylen-Derivate, wobei als Substituenten C₁ bis C₁₂ -Alkylreste geeignet sind. Es kann sich dabei um Homopolymere oder Copolymere handeln, die auch weitere Monomere enthalten können. Im folgenden sollen unter Homo/Copolymere auch solche Polymere aus mehr als zwei Monomeren verstanden werden. Dabei soll bevorzugt die Menge der Comonomere unterhalb 30 % betragen. Es handelt sich dabei häufig um amorphe ataktische Polyolefine. Eine Ausführungsform der Erfindung verwendet Copolymere auf Basis von C₂ mit C₄ bis C₂₀ -α-Olefinen. Eine andere Ausführungsform verwendet Polymere aus C₃ mit C₄ bis C₂₀ -α-Olefinen. Ebenso sind Copolymere auf Basis Ethylen/Propylen geeignet.

Die so erhaltenen (Co)polymere weisen ein Molekulargewicht von 1000 bis zu 200000 g/mol auf, insbesondere von 1000 bis zu 50000, besonders bevorzugt bis zu 30000 g/mol ( Molekulargewicht als Zahlenmittel (M_{N}), bestimmt über GPC-Methode ). Die Untergrenze beträgt 1000 g/mol, bevorzugt 1500 g/mol. Insbesondere sind solche Polymere geeignet, die durch Katalyse mit Metallocen-Verbindungen hergestellt werden. Der Schmelzindex dieser Polymere soll größer als 5 g/10 min betragen, bevorzugt mehr als 30 g/10 min, insbesondere über 100 g/10 min betragen (gemessen bei 190 °C, 2,16 kg, DIN ISO 1133). Die Viskosität solcher Polymere ist im allgemeinen niedrig. Der Erweichungspunkt der Polymere soll unterhalb von 200° C liegen, insbesondere unterhalb von 160° C. Die Menge dieser Copolymere soll 10- 80 Gew.-% betragen, insbesondere zwischen 10 bis 60 Gew.-%.

Diese Polymere sind in der Literatur bekannt und können von verschiedenen Herstellern kommerziell erhalten werden. Bei dem (Co)polymer kann es sich um ein Polymer handeln, es ist jedoch auch möglich, dass ein Gemisch aus bis zu drei Polymeren eingesetzt wird.

Als weiteren Bestandteil enthält der erfindungsgemäße Schmelzklebstoff mindestens ein klebrigmachendes Harz. Das Harz bewirkt eine zusätzliche Klebrigkeit. Es wird in einer Menge von 5 bis 60 Gew.-% , bevorzugt 10 bis 50 Gew.-%, eingesetzt. Es handelt sich dabei insbesondere um Harze, die einen Erweichungspunkt von 70 bis 140 °C (gemessen nach ASTM E28) besitzen. Es sind dieses z.B. aromatische, aliphatische oder cycloaliphatische Kohlenwasserstoff-Harze, sowie modifizierte oder hydrierte Derivate. Weitere im Rahmen der Erfindung anwendbare Harze sind z.B. Polyterpenharze, phenolisch oder aromatisch modifizierte Polyterpenharze, modifizierte Naturharze wie Harzsäuren aus Balsamharz, Tallharz oder Wurzelharz, ggf. auch Hydroabietylalkohol und deren Ester, Acrylsäure-Copolymerisate, wie Styrol-Acrylsäure-Copolymere und Harze auf Basis funktioneller Kohlenwasserstoffharze. Bevorzugt ist es teil-/ oder voll hydriertes Kohlenwasserstoffharz und Kolophoniumharze einzusetzen.

Erfindungsgemäß ist es wesentlich, dass in dem Schmelzklebstoff mindestens ein Polymerisat auf Basis von Olefinen und (Meth)acrylsäureestern enthalten ist, das Carboxylgruppen und/oder Anhydridgruppen aufweist. Die Olefinmonomere können aus den bekannten C₂ bis C₅ -Olefinen ausgewählt werden, insbesondere Ethylen oder Propylen. Die (Meth)acrylsäureester werden aus Estern mit niedermolekularen C₁ bis C₈ -Alkanolen ausgewählt, insbesondere sind Methyl(meth)-acrylat, Ethyl(meth)acrylat, Propyl(meth)acrylat, Butyl(meth)acrylat oder 2-Ethylhexyl(meth)acrylat einzeln oder im Gemisch geeignet. Das Copolymere muss noch Carboxylgruppen und/oder Anhydridgruppen aufweisen. Das kann durch nachträgliche Modifikation der Copolymere oder durch Polymerisation geschehen. Beispielsweise ist es möglich, durch Oxidation COOH-Gruppen einzuführen, Weiterhin ist es bekannt, durch radikalische Pfropfungsreaktionen beispielsweise mit Maleinsäureanhydrid COOH- oder Anhydrid-Gruppen in das Polymere einzuführen.

In der erfindungsgemäßen Ausführungsform des Polymerisates handelt es sich jedoch um ein Terpolymer auf Basis von Olefinen und (Meth)acrylsäureestern mit Säuregruppen- oder Anhydridgruppen-haltigen ungesättigten Monomeren. Beispielsweise können diese Monomere ausgewählt werden aus co-polymerisierbaren ungesättigten Monocarbonsäuren, wie (Meth)acrylsäure, Crotonsäure, Itaconsäure, Citraconsäure; ungesättigten Dicarbonsäuren, wie Malein- oder Fumarsäure, Halbester der Malein-/ Fumarsäure mit C₁ bis C₈ -Alkanolen; Anhydriden solcher Säuren. Insbesondere geeignet sind Derivate der Maleinsäure. Die Menge der säuregruppen- oder anhydridgruppen-haltigen Monomere soll zwischen 0,1 bis 7,5 Gew.-% betragen.

Die Copolymere sollen ein Molekulargewicht (Mn) zwischen 3000 und 50000 g/mol aufweisen, insbesondere 8000 bis 25000 g/mol. Die Anzahl der COOH-/ Anhydrid-Gruppen soll zwischen 1 bis 100 mgKOH/g betragen, insbesondere zwischen 5 bis 50 mg KOH/g. Ist die Anzahl der Carboxylgruppen hoch, so ist die Verträglichkeit der Bestandteile des Schmelzklebstoffs kritisch, ist die Anzahl der Carboxylgruppen gering, wird die Haftung verschlechtert. Unabhängig von dem Molekulargewicht ist es zweckmäßig, um eine gute Verarbeitbarkeit zu erhalten, dass der Schmelzindex des Polymerisats hoch liegt. Der Schmelzindex des Polymerisates soll zwischen 1 - 1000 g/10 min liegen und insbesondere größer gleich 100 g/ 10 min sein (gemessen nach DIN ISO 1133 bei 190°C, 2,16 kg), bevorzugt größer/gleich 200 g/10 min. Dabei soll der Erweichungspunkt zwischen 70 °C bis 140°C liegen. Die Menge der COOH-Gruppen tragenden Polymerisats soll zwischen 0,1 bis 15 Gew.-% betragen insbesondere zwischen 1 bis 10 Gew.-%.

Die Polymerisate sollen einen Gehalt an (Meth)acrylsäureestern oder deren Derivaten von 0,1 - 60 Gew.-%, insbesondere 1 - 35 Gew.-%, und einen Gehalt an Säuregruppen- oder Anhydridgruppen-haltigen Monomeren von 0,1 - 7,5 Gew.-%, insbesondere 0,2 - 5 Gew.-%, besitzen. Der Schmelzpunkt eines bevorzugten Polymerisats soll zwischen 50 - 150 °C, insbesondere zwischen 80 - 120 °C liegen (DSC-Methode). Geeigneter Carboxylgruppen aufweisende Polymerisate sind kommerziell erhältlich und dem Fachmann bekannt.

Die erfindungsgemäßen Schmelzklebstoffe können neben den oben genannten Bestandteilen noch weitere, üblicherweise in Schmelzklebstoffen eingesetzte Bestandteile als Additive enthalten. Hierzu zählen beispielsweise Weichmacher, Stabilisatoren, Wachse, Haftvermittler und Antioxidantien. Damit können bestimmte anwendungstechnischen Eigenschaften, wie z. B. Kohäsionsfestigkeit, Viskosität, Erweichungspunkt beeinflusst werden. Weiterhin können Füllstoffe zur Festigkeitserhöhung und ggf. der Kostenreduzierung eingesetzt werden.

Zusätzlich zu den oben erwähnten Bestandteilen kann der Schmelzklebstoff ggf. noch elastische thermoplastische Polymere enthalten. Unter solchen elastischen Polymeren sind insbesondere Styrol-Block-Copolymere zu verstehen, die elastische oder Kautschuk-elastische Eigenschaften aufweisen können. Es kann sich dabei um 2 Block- oder 3 Block-Copolymere handeln, die mindestens einen Styrol-Block aufweisen können. Beispiele dafür sind SBR, SAN, Styrol-Isopren-Copolymere (SIS), Styrol-Ethylen/Buthylen-Copolymere (SEBS), Styrol-Ethylen/Propylen-Copolymere (SEPS), Styrol-Isopren-Butylen-Copolymere (SIBS), Strylol-Butadien-Copolymere (SBS), hydrierte Styrol-Butylen-Butadien-Copolymere (SBBS). Solche Block-Copolymere sind dem Fachmann bekannt und kommerziell erhältlich. Über die Länge der Styrol-Blöcke können die Eigenschaften des Block-Copolymeren beeinflusst werden.

Die Polymere sind vom Fachmann so auszuwählen, dass eine gute Verträglichkeit mit den anderen Bestandteilen des Schmelzklebstoffs gegeben ist. Die Menge der Copolymere kann 0,1 bis 25 Gew.-% betragen, insbesondere sollen 0,5 bis 15 Gew.-% mindestens ein thermoplastisches Elastomer enthalten sein. Gegebenenfalls können dem Schmelzklebstoff Wachse in Mengen von 0 bis 45 Gew.-% zugegeben werden, bevorzugt 5 bis 30 Gew.-%. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden, auch Mineralwachse oder petrochemische Wachse. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt.

Weichmacher werden vorzugsweise zum Einstellen der Viskosität oder der Flexibilität verwendet und sind in dem erfindungsgemäßen Schmelzklebstoff im allgemeinen in einer Konzentration von 0 bis 20 Gew.-%, vorzugsweise in einer Konzentration von 1 bis 10 Gew.-%, enthalten. Geeignete Weichmacher sind medizinische Weißöle, naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Ggf. werden auch Ester als Weichmacher eingesetzt, z. B. flüssige Polyester und Glycerinester oder Weichmacher auf Basis aromatischer Dicarbonsäureester. Ebenso können auch Alkylmonoamine und Fettsäuren mit vorzugsweise 8 bis 36 C-Atomen geeignet sein.

Die Stabilisatoren haben die Aufgabe, die Klebstoffzusammensetzung während der Verarbeitung vor Zersetzung zu schützen. Hier sind insbesondere die Antioxidantien zu nennen oder auch Lichtschutzmittel. Sie werden üblicherweise in Mengen bis zu 3 Gew.-%, vorzugsweise in Mengen von etwa 0,1 bis 1,0 Gew.-% dem Schmelzklebstoff beigefügt.

Weitere Additive können in den Schmelzklebstoff mit aufgenommen werden, um bestimmte Eigenschaften zu variieren. Das können beispielsweise Farbstoffe oder Füllstoffe wie Titandioxid, Talkum, Ton und dergleichen sein.

Darüber hinaus kann der erfindungsgemäße Schmelzklebstoff Haftvermittler enthalten. Haftvermittler sind Stoffe, die die Adhäsion des Schmelzklebstoffs zu dem zu verklebenden Substrat verbessern. Insbesondere sollen Haftvermittler das Alterungsverhalten von Klebungen unter Einfluss von feuchter Atmosphäre verbessern. Typische Haftvermittler sind zum Beispiel Ethylen/Acrylamid-Comonomere, polymere Isocyanate, reaktive siliciumorganische Verbindungen oder Phosphorderivate. Ebenso können die Benetzungseigenschaften des Klebstoffs auf den Substraten beeinflusst werden.

Die Additive, wie Weichmacher, Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Der erfindungsgemäße Schmelzklebstoff wird im allgemeinen durch Mischen hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Klebstoffbestandteile zugegeben und zum Schluss weitere Additive, die gegen Temperatur empfindlich sind, zufügt. Es ist auch möglich, den Schmelzklebstoff kontinuierlich in einem Extruder herzustellen. Nach dem Abfüllen oder Portionieren der vollständig homogenisierten Mischung lässt man diese abkühlen, wobei sie erstarrt. Der erfindungsgemäße Schmelzklebstoff ist von fester Konsistenz und bis auf Verunreinigungen frei von Lösemitteln. Verfahren zur Herstellung, Abfüllung und Verpackung erfindungsgemäßer Schmelzklebstoffe sind dem Fachmann bekannt. Er ist homogen in fester und flüssiger Phase, d.h. eine Schmelze ist klar und nicht opak oder trüb. Auch bei länger andauerndem Schmelzzustand ist keine Separation der Schmelzklebstoffbestandteile festzustellen.

Das Applikationsverfahren ist abhängig von der Art des zu verklebenden Substrats und den geeigneten Maschinen dafür. Es kann sich um punktförmigen Auftrag, flächenförmigen Auftrag oder streifenförmigen Auftrag handeln. Das Auftragen kann durch Applikation über Sprühdüsen, durch Extrusionsbeschichtung oder durch Walzenauftragssysteme geschehen.

Die erfindungsgemäßen Schmelzklebstoffe weisen eine Viskosität auf, die auf das Auftragsverfahren abgestimmt ist. Dabei besitzen die Schmelzklebstoffe eine Viskosität von 100 bis 30000 mPas, vorzugsweise 400 bis 20000 mPas, insbesondere 500 bis 5000 mPas bei einer Temperatur von 160° C (gemessen mit Brookfield Thermosel, Spindel 27, bei angegebener Temperatur).

Bei der Anwendung ist es zweckmäßig, einen Schmelzklebstoff mit möglichst geringer Viskosität bei Applikationstemperatur zu verwenden. Dadurch wird eine bessere Auftragbarkeit sowie eine leichtere Förderbarkeit des Schmelzklebstoffs gewährleistet. Ebenso wird die Benetzung des Substrats dadurch gefördert. Nach dem Auftragen auf die eine Substratoberfläche muss die der Luft zugewandte Seite des Schmelzklebstoffs möglichst lange klebrig und haftfähig bleiben.

Diese offene Zeit ist von dem Schmelzverhalten und Kristallisationsverhalten des Schmelzklebstoffes abhängig. Durch den erfindungsgemäßen Schmelzklebstoff werden gute Applikationseigenschaften erzielt. Auch bei längerem Verweilen in aufgeschmolzener Phase ist keine Separation einzelner Bestandteile oder Phasentrennung zu beobachten. Die Haftung zu Kunstoberflächen oder den veredelten Oberflächen ist gut. Der Verbund aus Substrat und Klebstoff ist auch bei un-terschiedlichen Temperaturen gegeben.

Die erfindungsgemäßen Schmelzklebstoffe werden zum Verkleben von Substraten, wie beschichtetes Papier oder Pappen, Folien, Kunststoffe oder metallisierte, fettabweisende oder lackierte Oberflächen, verwendet. Sie sind insbesondere zum Verkleben von Kunststoffoberflächen aus Polyethylen, Polypropylen als flexible Folie, als beschichtetes Papier oder Karton, als festes Substrat , z.B. Flaschen oder Becher, oder für Aluminium beschichtete Oberflächen geeignet. Der erfindungsgemäße Schmelzklebstoff kann zum Verkleben von Mehrschichtfolien, Be-hältern, wie Faltschachteln, Umkartons, trays oder zum Verkleben auf geformten Substraten verwendet werden. Weiterhin können mit einem erfindungsemäßen Schmelzklebstoff Kunststoffteile an Verpackungen befestigt werden. Beispielsweise können Verschlüsse, Ausgießer oder andere Formteile an eine Verpackung geklebt werden. Die Verklebung dient zur Befestigung, kann aber auch eine Klebenaht abdichten. Durch eine lange Offenzeit und hohe Schmelzstabilität ist eine gute Verarbeitbarkeit gewährleistet. Die erfindungsgemäßen Schmelzklebstoffe zeichnen sich insbesondere durch eine sehr gute Adhäsion auf den vorgenannten Substraten aus. Die so hergestellten Verbunde bleiben auch bei niedriger Temperatur flexibel, zeigen aber auch in der Wärme eine gute Stabilität.

Die vorliegende Erfindung wird nachfolgend durch Beispiele näher erläutert.

### Beispiele:

### Beispiel 1 (Vergleich):

| | | |
|---|---|---|
| 35 Teile | Ethylen/1-Octen Copolymer | ( Affinity GA 1950 ) |
| 45 Teile | Klebrigharz, Kohlenwasserstoffharz | (I-Marv P-125) |
| 20 Teile | Paraffinwachs | (Sasolwachs H 1) |

### Beispiel 2:

| | | |
|---|---|---|
| 20 Teile | Ethylen/1-Octen Copolymer | ( Affinity GA 1900 ) |
| 17 Teile | Ethylen/1-Octen Copolymer | ( Affinity GA 1950 ) |
| 40 Teile | Klebrigharz, Kohlenwasserstoffharz | (I-Marv P-125) |
| 3 Teile | Ethylen/Ethylacrylat/MSA-Terpolymer | (Lotader 8200) |
| 20 Teile | Paraffinwachs | (Sasolwachs H1) |

### Beispiel 3 (Vergleich):

| | | |
|---|---|---|
| 20 Teile | Ethylen/1-Octen Copolymer | ( Affinity GA 1900 ) |
| 17 Teile | Ethylen/1-Octen Copolymer | ( Affinity GA 1950 ) |
| 40 Teile | Klebrigharz ,Kohlenwasserstoffharz | (I-Marv P-125) |
| 20 Teile | Paraffinwachs | (Sasolwachs H1) |
| 3 Teile | Ethylen-Butylacrylat | ( Lotryl 35 BA 320) |

### Beispiel 4:

| | | |
|---|---|---|
| 28 Teile | Ethylen/1-Octen Copolymer | ( Affinity GA 1900 ) |
| 45 Teile | Klebrigharz, Kohlenwasserstoffharz | (I-Marv P-125) |
| 7 Teile | Ethylen/Ethylacrylat/MSA-Terpolymer | (Lotader 8200) |
| 20 Teile | Paraffinwachs | (Sasolwachs H1) |

### Beispiel 5:

| | | |
|---|---|---|
| 40 Teile | Ethylen/1-Octen Copolymer | ( Affinity GA 1900 ) |
| 3 Teile | Ethylen/ Ethylacrylat/MSA-Terpolymer | (Lotader 8200) |
| 3 Teile | SIS Block-Copolymer | |
| 34 Teile | Klebrigharz | (I-Marv P-125) |
| 20 Teile | Paraffinwachs | (Sasolwachs H1) |

### Verfahren:

Die Bestandteile werden in einem handelsüblichen Laborrührgerät bei 160 ° C aufgeschmolzen und gerührt, bis sie homogen sind. Danach werden sie zum Abkühlen in geeignete Gefäße abgefüllt.

| -Ergebnisse: | Beispiel 1 | B.2 | B.3 | B.4 | B.5 |
|---|---|---|---|---|---|
| Verträglichkeit | ja | ja | nein | ja | / |
| Schmelzstabilität | ja | ja | nein | ja | ja |
| Viskostät 160°C (mPas) | 1600 | 1550 | 1450 | 1650 | / |
| Offene Zeit (sec) | 6 | 8 | 7 | 8 | 8 |
| | Adhäsion (25 °C )/ Adhäsion (-10 °C) | | | | |
| Kraftliner-Papier | o/- | +/+ | +/o | +/+ | +/+ |
| Lackiertes Papier(Frövi) | -/o | +/ + | -/- | +/+ | |
| Karton mit OPP-Beschichtung | -/- | o/o | -/- | +/o | |
| Papier mit PE-Beschichtung | -/- | +/+ | -/- | +/+ | +/+ |
| Karton mit PET-Beschichtung | -/- | +/o | -/- | +/o | |
| Aluminium beschichtete Folie | -/- | +/o | -/- | +/+ | +/+ |

### Testverfahren:

| | |
|---|---|
| Viskosität: | angegebene Temperatur; Brookfield Thermosel, Spindel 27 |
| Offene Zeit: | Mit einem Rakel werden bei 170 °C Klebstoffstreifen aufgetragen und in zeitlichem Abstand nacheinander mit Papierstreifen und leichten Druck abgedeckt. Durch Abreißen wird die Zeit bestimmt, nach der eine Verklebung nicht mehr möglich ist. |
| Verträglichkeit: | transparente Schmelze bei 170 °C . |
| Schmelzstabilität: | keine Phasenseparation bei 170 °C nach 75 Std. |
| Adhäsion: | - mangelhafte Adhäsion (Adhäsionsbruch) |
| | + gute Adhäsion |
| | o ausreichende Adhäsion |

Es werden bei angegebenen Bedingungen zwei Substratstreifen miteinander verklebt und 3 Tage bei 25°C oder -10°C gelagert. Danach werden die Proben bei der angegebenen Temperatur auf Adhäsion-getestet.

## Patentansprüche

1. Schmelzklebstoff, enthaltend
| | |
|---|---|
| 10 bis 80 Gew.-% | mindestens eines Copolymeren auf Basis Ethylen und/oder Propylen und C₄ bis C₂₀-α-Olefinen, das durch Metallocene-katalysierte Polymerisation erhältlich ist, |
| 5 bis 60 Gew.-% | mindestens eines klebrigmachenden Harzes, |
| 0,1 bis 15 Gew.-% | mindestens eines Polymerisates auf Basis von C₂ bis C₅ -Olefinen und (Meth)acrylsäureestern, wobei das Polymerisat COOH-Gruppen oder Anhydridgruppen enthält, wobei in diesem Terpolymer 0,1 Gew.-% bis 7,5 Gew.-% von α-β-ungesättigten Mono- oder Dicarbonsäuren oder deren Anhydride enthalten sind, |
| 0 bis 45 Gew.-% | Additive |

2. Schmelzklebstoff nach Anspruch 1, **dadurch gekennzeichnet, dass** das Terpolymer zwischen 0,2 bis 5 Gew.-% von α, β-ungesättigten Mono- oder Dicarbonsäuren oder deren Anhydride enthält.

3. Schmelzklebstoff nach Anspruch 2, **dadurch gekennzeichnet, dass** das Terpolymer ein Monomer ausgewählt aus (Meth)Acrylsäure, Crotonsäure, Itaconsäure, Maleinsäure, Fumarsäure, Monoeester der Malein- oder Fumarsäure mit C₁ bis C₈ -Alkanolen oder Citraconsäure enthält oder deren Anhydride.

4. Schmelzklebstoff nach einem der Ansprüche 1 bis 3, **dadurch gekennzeichnet, dass** das Polymerisat auf Basis C₂ bis C₅-Olefin/(Meth)acrylsäureester ein Molekulargewicht von 1000 bis 25000 g/mol aufweist.

5. Schmelzklebstoff nach einem der Ansprüche 1 bis 4, **dadurch gekennzeichnet, dass** das Polymerisat zwischen 1 bis 10 Gew.-% enthalten ist.

6. Schmelzklebstoff nach einem der Ansprüche 1 bis 5, **dadurch gekennzeichnet, dass** das Copolymer auf Ethylen/Propylen-Basis zwischen 10 bis 60 Gew.-% enthalten ist und ein Molekulargewicht (M_{N}) zwischen 1500 bis 50000 aufweist

7. Schmelzklebstoff nach einem der Ansprüche 1 bis 6, **dadurch gekennzeichnet, dass** als Additiv 5 bis 30 % eines Wachses enthalten sind.

8. Schmelzklebstoff nach einem der Ansprüche 1 bis 7, **dadurch gekennzeichnet, dass** zusätzlich 0,1 bis 25 Gew.-% eines elastischen thermoplastisch Polymeren enthalten sind.

9. Verwendung eines Schmelzklebstoffs nach einem der Ansprüche 1 bis 8 zum Verkleben von Substraten mit veredelten Oberflächen, wie Kunststoff-, Metallbeschichtung, Behandlung mit fettabweisenden Substanzen oder Lackierungen.

10. Verwendung eines Schmelzklebstoffs nach Anspruch 9 zum Verkleben von Verpackungen und von Kartonagen.

11. Verwendung eines Schmelzklebstoffs nach Anspruch 9 zum Verkleben von Kunststoffformteilen mit Verpackungen.

## Claims

1. A hot-melt adhesive containing
| | |
|---|---|
| 10 to 80 wt.% | of at least one copolymer based on ethylene and/or propylene and C₄ to C₂₀ α-olefins which is obtainable by metallocene-catalysed polymerisation, |
| 5 to 60 wt.% | of at least one tackifying resin, |
| 0.1 to 15 wt.% | of at least one polymer based on C₂ to C₅ olefins and (meth)acrylic acid esters, the polymer containing COOH groups or anhydride groups, said terpolymer containing 0.1 wt.% to 7.5 wt.% of α,β-unsaturated mono- or dicarboxylic acids or the anhydrides thereof, |
| 0 to 45 wt.% | of additives. |

2. A hot-melt adhesive according to claim 1, **characterised in that** the terpolymer contains between 0.2 and 5 wt.% of α,β-unsaturated mono- or dicarboxylic acids or the anhydrides thereof.

3. A hot-melt adhesive according to claim 2, **characterised in that** the terpolymer contains a monomer selected from (meth)acrylic acid, crotonic acid, itaconic acid, maleic acid, fumaric acid, monoesters of maleic or fumaric acid with C₁ to C₈ alkanols or citraconic acid or the anhydrides thereof.

4. A hot-melt adhesive according to any one of claims 1 to 3, **characterised in that** the polymer based on C₂ to C₅ olefin/(meth)acrylic acid esters has a molecular weight of 1000 to 25000 g/mol.

5. A hot-melt adhesive according to any one of claims 1 to 4, **characterised in that** the polymer is present in an amount between 1 and 10 wt.%.

6. A hot-melt adhesive according to any one of claims 1 to 5, **characterised in that** the copolymer based on ethylene/propylene is present in an amount of between 10 and 60 wt.% and has a molecular weight (M_{N}) of between 1500 and 50000.

7. A hot-melt adhesive according to any one of claims 1 to 6, **characterised in that** 5 to 30% of a wax are present as an additive.

8. A hot-melt adhesive according to any one of claims 1 to 7, **characterised in that** 0.1 to 25 wt.% of a resilient thermoplastic polymer are additionally present.

9. Use of a hot-melt adhesive according to any one of claims 1 to 8 for adhesively bonding substrates with finished surfaces, such as a plastics coating, metal coating, treatment with grease-repellent substances or lacquer or varnish coatings.

10. Use of a hot-melt adhesive according to claim 9 for adhesively bonding packaging and paperboard boxes.

11. Use of a hot-melt adhesive according to claim 9 for adhesively bonding plastics mouldings to packaging.

## Revendications

1. Colle fusible contenant
| | |
|---|---|
| de 10 à 80 % en poids | d'au moins un copolymère à base d'éthylène et/ou de propylène et d'α-oléfines en C₄-C₂₀, que l'on peut obtenir via une polymérisation catalysée par un métallocène ; |
| de 5 à 60 % en poids | au moins une résine donnant du collant ; |
| de 0,1 à 15 % en poids | d'au moins un polymère à base d'oléfines en C₂-C₅ et d'esters d'acides (méth)acryliques, le polymère contenant des groupes COOH ou des groupes anhydride, ledit terpolymère contenant de 0,1 % en poids à 7,5 % en poids d'acides monocarboxyliques ou dicarboxyliques à insaturation α,β ou leurs anhydrides; |
| de 0 à 45 % en poids | d'additifs. |

2. Colle fusible selon la revendication 1, **caractérisée en ce que** le terpolymère contient de 0,2 % en poids à 5 % en poids d'acides monocarboxyliques ou dicarboxyliques à insaturation α,β ou leurs anhydrides.

3. Colle fusible selon la revendication 2, **caractérisée en ce que** le terpolymère contient un monomère choisi parmi l'acide méthacrylique, l'acide crotonique, l'acide itaconique, l'acide maléique, l'acide fumarique, des monoesters de l'acide maléique ou de l'acide fumarique avec des alcanols en C₁-C₈ ou l'acide citraconique ou bien leurs anhydrides.

4. Colle fusible selon l'une quelconque des revendications 1 à 3, **caractérisée en ce que** le polymère à base d'oléfines en C₂-C₅/esters d'acides (méth)acryliques présente un poids moléculaire de 1000 à 25.000 g/mol.

5. Colle fusible selon l'une quelconque des revendications 1 à 4, **caractérisée en ce qu'**elle contient le polymère en une quantité entre 1 et 10 % en poids.

6. Colle fusible selon l'une quelconque des revendications 1 à 5, **caractérisée en ce qu'**elle contient le copolymère à base d'éthylène/propylène en une quantité entre 10 et 60 % en poids, ledit copolymère présentant un poids moléculaire (Mn) entre 1500 et 50.000.

7. Colle fusible selon l'une quelconque des revendications 1 à 6, **caractérisée en ce qu'**elle contient une cire de 5 à 30 %, à titre d'additif.

8. Colle fusible selon l'une quelconque des revendications 1 à 7, **caractérisée en ce qu'**elle contient en outre 0,1 à 25 % en poids d'un polymère thermoplastique élastique.

9. Utilisation d'une colle fusible selon l'une quelconque des revendications 1 à 8, pour le collage de substrats comprenant des surfaces affinées telles qu'une enduction à base d'une matière synthétique, une enduction métallique, un traitement avec des substances repoussant les graisses ou des vernissages.

10. Utilisation d'une colle fusible selon la revendication 9, pour le collage d'emballages et de cartonnages.

11. Utilisation d'une colle fusible selon la revendication 9, pour le collage d'éléments moulés en matière synthétique avec des emballages.
